# EUROPÄISCHE PATENTSCHRIFT

(11) **EP 1 825 740 B1**
(45) Veröffentlichungstag und Bekanntmachung des Hinweises auf die Patenterteilung: **02.05.2012**
(21) Anmeldenummer: 07100410.5
(22) Anmeldetag: 11.01.2007
(51) Int. Cl.: A01D 43/08

(54) **Verfahren und Vorrichtung zur Bestimmung der Verdichtungseigenschaften von Erntegut**
Method and device for determining the compacting properties of crops
Procédé et dispositif destinés à la détermination des propriétés de compactage de biens de récolte

(30) Priorität: 28.02.2006 DE 102006009575
(43) Veröffentlichungstag der Anmeldung: 29.08.2007
(73) Patentinhaber: CLAAS Selbstfahrende Erntemaschinen GmbH, 33428 Harsewinkel (DE)
(72) Erfinder: Haffert, Andreas Dr., 33334 Gütersloh (DE); Degen, Peter Dr., 48336 Sassenberg (DE)

(56) Entgegenhaltungen:
- EP-A- 1 454 519
- EP-A- 1 606 992
- EP-A1- 0 938 838

## Beschreibung

Die Erfindung betrifft ein Verfahren und eine Vorrichtung zur Bestimmung der Verdichtung von Erntegut nach dem Oberbegriff der Patentansprüche 1 und 9.

Aus des EP 0931 446 A1 ist eine Messvorrichtung zur Bestimmung erntegut- und/oder fördenspezifischer Parameter an einer landwirtschaftlichen Arbeitsmaschine bekannt. Dabei befindet sich die Messvorrichtung direkt am Auswurfgebläse eines Feldhäckslers, wobei die Messvorrichtung direkt in den Erntegutstrom eingreift und aus dem direkten Kontakt mit dem geförderten Erntegut einen Parameter des Erntegutes, wie beispielhaft die Gutfeuchte bestimmt. Nachteilig an dieser Ausführungsform ist jedoch, dass die Ermittlung eines Parameters in starker Abhängigkeit vom Erntegutdurchsatz erfolgt, wobei zudem Rückschlüsse auf die Verdichtungseigenschaft und damit auf die aufzubringende Verdichtungskraft zur optimalen Verdichtung des Erntegutes nicht gezogen werden können.

In der DE 102 30 475 A1 wird eine Probenentnahmevorrichtung offenbart, wobei Erntegut aus dem Erntegutstrom heraus zwatigsumgeleitet wird. Die so gewonnenen und nicht vom Durchsatz abhängigen Proben können zur Entwicklung von Kalibrierungen von NIR - Messsystemen dienen. Aber auch Informationen über Qualitätsparameter des Erntegutes, wie Feuchtigkeit, können so gewonnen werden. Das Problem der Ermittlung der Verdichtungsetgenschaft des Erntegutes wird durch die in der DE 102 30 475 A1 offenbarte Ausführung nicht gelöst.

Während die Verdichtungseigenschaften von Erntegut einerseits maßgeblich die Ontine-Sensierung von Erntegutdurchsätzen beeinflussen sind sie andererseits aber auch von großer Bedeutung für die Optimierung von Erntegutverdichtungsvofgängen, wie dies etwa bei der Einlagerung von Erntegut in Silos der Fall ist. So hängt die Stabilität einer Silage maßgeblich von der Verdichtung des einzulagernden Erntegutes ab. Wird beim Siloaufbau das neu geschnittene Erntegut nicht permanent und gewissenhaft verdichtet, wird Restsauerstoff in den einzelnen aufgetragenen Erntegutlagen eingeschlossen, welches letztendlich zur Bildung von unerwünschten Organismen wie Hefen und Pilzen und zu Fehlgärungen führen kann, was wiederum den Nährwertgehalt der Silage erheblich mindert. Die aufzubringende Verdichtungskraft ist wiederum abhängig von der Komprimierbarkeit das abgeschnittenem Erntegut, die insbesondere von Parametern wie dem Feuchtegehalt oder der Schrittlänge des Erntegutes abhängig sind.

Aus der EP 1 454 519 A1 ist ein Verfahren bzw. eine Vorrichtung zur Bestimmung der Verdichtung von Erntegut einer landwirtschaftlichen Arbeitsmaschine bekannt. Eine dem laufenden Erntebetrieb entnommene Erntegutprobe wird dazu in einer Probenkammer mittels eines darin beweglichen Verdichtungskolbens definiert vorverdichtet.

Es ist Aufgabe der Erfindung, die Nachteile des zitierten Standes der Technik zu beheben und insbesondere ein Verfahren und eine nach diesem Verfahren arbeitende Vorrichtung zu schaffen, wodurch eine gegenüber dem Stand der Technik zuverlässigere und genauere Bestimmung der Verdichtungseigenschaft von abgeschnittenem Erntegut im laufenden Erntebetrieb ermöglicht wird.

Diese Aufgabe wird gemäß der Erfindung durch die kennzeichnenden Merkmale der Ansprüche 1 und 9 gelöst, wobei in den Unteransprüchen Merkmale aufgeführt sind, die diese Lösung in vorteilhafter Weise weiterentwickeln.

Indem die Verdichtung der Gutprobe in Abhängigkeit von wenigstens einer von der Verdichtungseinrichtung erzeugten Verdichtung der Gutprobe ermittelt wird, wobei zumindest ein der Verdichtungsvorrichtung zugeordnetes Verdichtungselement zugleich die Gutprobe durch translatorische Bewegung auf die Gutprobe zu belastet und sich relativ zur Gutprobe mit einer Dreh- oder Oszillierbewegung um die eigene Längsachse bewegt, kann eine zum Stand der Technik verbesserte Ermittlung der Verdichtungseigenschaft von Erntegut erreicht werden. Insbesondere dadurch, dass die Gutprobe durch Belastung und Drehbewegung des Verdichtungselementes komprimiert wird, können in sperrigem Erntegut auftretende Hohlräume, wodurch unerwünschte Messschwankungen auftreten, nahezu vollständig geschlossen werden und ein genaueres Maß für die Verdichtung ermittelt werden. Dabei belastet das wenigstens eine Verdichtungselement die Gutprobe durch translatorische Bewegung auf die Gutprobe zu und bewegt sich zeitgleich relativ dazu mit einer Dreh- und Oszillierbewegung, Dadurch wirken neben der vertikalen Kraft zeitgleich Scherkräfte auf die Gutprobe, was ein Schließen von Hohlräumen bewirkt und damit eine optimale Verdichtung der Gutprobe ermöglicht wird.

Dadurch, dass die Belastung und die Relativbewegung des zumindest einen Verdichtungselementes in Abhängigkeit von der Erntegutart und/oder deren Ernteguteigenschaft einstellbar ist, kann die von dem Verdichtungselement in die Gutprobe eingeleitete Verdichtungskraft an unterschiedliche Erntegutarten und -strukturen angepasst werden.

In einer vorteilhaften Ausgestaltung der Erfindung wird aus der ermittelten Verdichtung der Gutprobe ein Maß für die Verdichtungseigenschaft des Erntegutes abgeleitete. Dies hat insbesondere den Vorteil, dass nunmehr ein Parameter vorliegt, der eine qualitative Beurteilung der Verdlchtbarkeit von Erntegut zulässt. Im einfachsten Fall wird die Verdichtungseigenschaft des Erntegutes durch Ermittlung des Rückdehnungsverhaltens einer Gutprobe bestimmt.

Eine sehr präzise Ermittlung von Erntegutdurchsätzen oder Ernteguterträgen ergibt sich in vorteilhafter Ausgestaltung der Erfindung dann, wenn in der landwirtschaftlichen Arbeitsmaschine eine Ertragsmesseinrichtung vorhanden ist und der von der Ertragsmesseinrichtung ermittelte Erntegutdurchsatz und/oder Erntegutertrag unter Berücksichtigung der ermittelten Verdichtung und des ermittelten Rückdehnungsverhaltens der Gutprobe erfolgt. Eine derartige Ausführung hat insbesondere den Vorteil, dass die für eine Massenbestimmung erforderlichen Dichtewerte einer Gutprobe präziser und damit das Gesamtergebnis einer Durchsatzmessung genauer wird.

In vorteilhafter Ausgestaltung der Erfindung steht das ermittelte Rückdehnungsverhalten des Erntegutes weiteren Anwendungen zur Verfügung. Eine besonders vorteilhafte Weiterbildung ergibt sich dann, wenn die weitere Anwendung das Betreiben einer landwirtschaftlichen Arbeitsmaschine mit einer Verdichtungsvorrichtung in einem Flachsilo ist und vor der Anlieferung des zu sillerenden Erntegutes, der Betreiber der landwirtschaftlichen Arbeitsmaschine zumindest das ermittelte Rückdehnungsverhalten mitgeteilt bekommt, wobei der Bediener anhand dieser Mitteilung die Wirkung der Verdichtungsvorrichtung einstellen kann.

In einer weiteren Ausgestaltung der Erfindung ist die landwirtschaftliche Arbeitsmaschine ein Feldhäcksler mit wenigstens einer Einzugs- und einer auslenkbar gelagerten Vorpresswalze zur Verdichtung des zwischen der wenigstens einen Einzugs- und Vorpresswalze geförderten Erntegutes, wobei anhand der Auslenkung der wenigstens einen Vorpresswalze der Erntegutdurchsatz durch die landwirtschaftliche Arbeitesmaschine ermittelt, während des Verdichtungsprozesses der Gutprobe In der Verdichtungseinrichtung, die Verdichtungskraft, das zugehörige Volumen und Maß für das Rückdehnungaverhalten der Gutprobe ermittelt, wenigstens ein Verhältnis zwischen der Verdichtungskraft, dem Rückdehnungsverhalten und dem Volumen ermittelt und das wenigstens eine Verhältnis bei der Ermittlung des Emtegutdurchsatzes berücksichtigt wird.

Eine vorteilhafte Ausgestaltung der Erfindung ergibt sich insbesondere dadurch, dass wenigstens ein Sensor zur Ermittlung einer definierten Vorverdichtung der in der Verdichtungseinrichtung befindlichen Gutprobe vorhanden ist und wobei der Verdichtungsvorrichtung zumindest ein Verdichtungselement zugeordnet ist und das Verdichtungselement die Gutprobe belastet und sich relativ zu dieser bewegt.

In einer besonderen Ausgestaltung der Erfindung wird die Gutprobe unmittelbar durch eine Öffnung aus dem Erntegutstrom in der landwirtschaftlichen Arbeitsmaschine in die Verdichtungseinrichtung geleitet. Störanfällige Zwischenförderer können hierdurch vollständig entfallen, wodurch eine ständige Verfügbarkeit der Vorrichtung im Arbeitsbetrieb gewährleistet wird.

Die landwirtschaftliche Arbeitsmaschine ist vorteilhaft ein Feldhäcksler mit einer Häckseltrommel und einem die Häckseltrommel zumindest teilweise umschließenden gutumlenkenden Trommelboden und wobei die Öffnung an dem gutumlenkenden Trommelboden angeordnet ist. In einer Häckseltrommel eines Feldhäckslers findet durch die darin rotierenden Messer eine aktive Förderung des Erntegutes statt. Die Anordnung der Öffnung an dem gutumlenkenden Trommelboden bewirkt eine sichere Entnahme von Erntegut aus der Häckslertrommel. Es wird hierbei die während der Entnahme der Gutprobe ausbleibende Gutumlenkung an der offenen Öffnung, zur Förderung der Gutprobe In die Verdichtungsvorrichtung ausgenutzt. In Verbindung mit der aktiven Förderung in der Häckseltrommel, findet vorteilhaft eine ständige Nachförderung zur Öffnung sowie eine Reinigung der Entnahmestelle statt. Eine bleibende Störung des Gutflusses sowie eine Gutansammlung durch die Emtgutprobennahme wird durch die vorteilhafte Lage der Öffnung ausgeschlossen. Diese Vorteile ergeben sich auch, wenn die landwirtschaftliche Arbeitsmaschine ein Mähdrescher mit einem Strohhäcksler und einem daran befindlichen gutumlenkenden Führungsboden ist und die Öffnung an dem gutumlenkenden Führungsboden angeordnet ist.

In einer weiteren Ausgestaltung der Erfindung wird die Gutprobe aus der Verdichtungseinrichtung mittels des wenigstens einen drehbeweglichen Verdichtungselementes in den Erntegutstrom der landwirtschaftlichen Arbeitsmaschine zurückgeführt. Die Gutprobe geht hierdurch nicht verlustig und ein sauberes Bearbeitungsfeld wird hinterlassen.

Indem in einer vorteilhaften Ausgestaltung der Erfindung der weiteren landwirtschaftlichen Arbeitsmaschine eine Steuer- und Auswerteinheit zugeordnet ist und die Steuer- und Auswerteinheit ein der Rückdehnung des zu verdichtenden Erntegutes proportionales Rückdehnungssignal empfängt und Mittel vorgesehen sind die eine Änderung der von der Verdichtungsvorrichtung In das zu verdichtende Erntegut einzubringenden Belastungen ermöglichen, wird sichergestellt, dass die Verdichtungswirkung der Verdichtungsvorrichtung an das Rückdehnungsverhalten des zu verdichtenden Erntegutes anpassbar ist.

Erfindungsgemäß umfassen die in das zu verdichtende Erntegut einzubringenden Belastungen die Verdichtungskräfte und die Dreh- oder Oszillierbewegung des oder der Verdichtungselemente, sodass durch einfache Drehzahländerung der Verdichtungselemente und durch Auflagedruckregelung eine flexible und schnelle Anpassung der Belastungen an die Jeweiligen Ernteguteigenschaften sichergestellt werden kann.

Weitere vorteilhafte Ausgestaltungen sind Gegenstand weiterer Unteransprüche und werden nachfolgend anhand von Zeichnungen näher erläutert.

Es zeigen:
- Figur 1: den frontseitigen Abschnitt eines Feldhäckslers mit erfindungsge- mäßer Verdichtungseinrichtung In einer Seitenansicht
- Figur 2: eine weitere landwirtschaftliche Arbeitsmaschine zur Verdichtung Von Erntegut in einem Silo

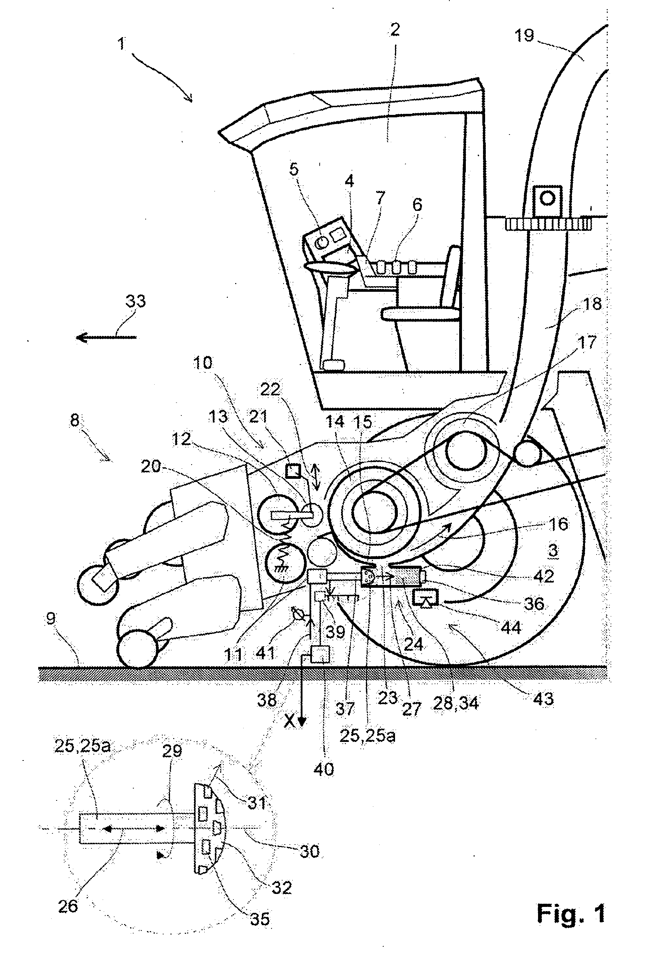

Figur 1 zeigt einen in Fahrtrichtung 33 vorderen Teil einer als feldhäcksler 1 ausgeführten landwirtschaftlichen Arbeitsmaschine mit einer Fahrerkabine 2 und einem Antriebsreifen 3. In der Fahrerkabine 2 ist eine Anzeigeeinrichtung 4 und wenigstens eine Einstelleinrichtung 5 sowie weitere Bedienelemente für den Betrieb des Feldhäckslers 1, wie Schalter 6 und der Fahrhebel 7, dargestellt. Der gezeigte Feldhäcksler 1 Ist mit einem Vorsatzgerät 8 ausgerüstet, mittels welchem der Feldhäcksler 1 nicht dargestelltes Erntegut von dem Feldboden 9 aufnimmt und an das nachgeschaltete Einzugsaggregat 10, auf dessen Breite zusammengeführt, abgibt. Innerhalb des Einzugsaggregates 10 sind zwei angetriebene untere Einzugswalzen 11 und zwei angetriebene obere beweglich gelagerte Vorpresswalzen 12, 13 angeordnet. Das dem Einzugsaggregat 10 zugeführte Erntegut wird zwischen den Einzugswalzen 11 und den Vorpresswalzen 12, 13 durch die von wenigstens einer Feder 20 auf die Vorpresswalzen 12, 13 wirkenden Kraft vorverdichtet und an die nachfolgende Häckseltrommel 14 übergeben. Die rotierende Häckseltrommel 14 häckselt das Erntegut und fördert es aktiv entlang des Trommelbodens 15 in Förderrichtung 16 zu einem Nachbeschleuniger 17. Das Erntegut wir dort nachbeschleunigt und durch den Austragschacht 18 sowie den nachgeordneten Auswurfkrümmer 19 in einen nicht dargestellten Transportbehälter überladen.
Der gezeigte Feldhäcksler 1 ist mit einer dem Fachmann bekannten Ertragsmesseinrichtung ausgestattet, wobei in der Figur 1 nur der an sich bekannte und deshalb nicht näher beschriebene Spaltsensor 21 zur Ermittlung des Abstandes zwischen der hinteren Einzugswalze 11 und der hinteren Vorpresswalze 13 dargestellt ist. Die von der vorgepressten Erntegutschicht erzeugte Auslenkung 22 der hinteren Vorpresswa!ze 13 wird von einer nicht näher dargestellten Auswerteeinrichtung in Verbindung mit der Breite des Einzugsaggregates 10 und der Erntegutgeschwindigkeit zu einem Erntedurchsatzvolumen verrechnet. Aus dem geförderten Erntegutvolumen kann in Verbindung mit der Dichte des Erntegutes ein Erntegutdurchsatz in t/h berechnet werden.

An dem Trommelboden 15 ist die elfindungsgemaße Verdichtungseinrichtung 24, welche nach dem erfindungsgemäßen Verfahren arbeitet, angeordnet. Eine Anbringung der Verdichtungseinrichtung 24 an einem Führungsboden eines Strohhäcksler in einem Mähdrescher liegt im Rahmen der Erfindung und bedarf, durch die für einen Fachmann naheliegende direkte Übertragbarkeit, keiner weiteren näheren Erläuterung, Weiterhin liegt es im Rahmen der Erfindung, wenn die Befüllung der Verdichtungseinrichtung 24 während des Arbeitsprozesses manuell ausgelöst wird oder automatisch erfolgt.

Die erfindungsgemäße Verdichtungseinrichtung 24 beinhaltet ein noch näher zu beschreibendes, als Verdichtungskolben 25 ausgeführtes Verdichtungselement 25a, welches in einer Probenkammer 34 beweglich angeordnet ist. Die Probenkammer 34 ist in Fahrtrichtung 33 des Feldhäckslers 1, welche in etwa der Ausrichtung des Erntegutstroms entlang des Trommelbodens 15 entspricht, ausgerichtet, wobei die Förderrichtung 16 des Erntegutes entgegengesetzt der Fahrtrichtung 33 ist. Die Verdichtungs-/ und Bewegungsrichtung des Verdichtungskolbens 25 innerhalb der Probenkammer 34 entspricht bauartbedingt der Ausrichtung der Probenkammer 34.
Der Trommelboden 15 ist gutumlenkenden ausgebildet und beinhaltet eine Öffnung 23. Durch diese wird im Arbeitsbetrieb des Feldhäckslers 1, die Probenkammer 34 mit gehäckseltem Erntegut befüllt. Diese Öffnung 23 selbst wird von dem Verdichtungskolben 25, in der gezeigten Stellung, zur Entnahme einer Gutprobe aus der Häckseltrommel 14 geöffnet. Durch die Öffnung 23 gelangt nun von der Häckslertrommel 14 gehäckseltes Erntegut durch die im Bereich der Öffnung 23 ausbleibende Erntegutumlenkung, die wirkende Zentrifugalkraft und die aktive Förderung durch die Häckseltrommel 14 direkt in die Probenkammer 34.

Der Verdichtungskolben 25 kann gemäß Pfeilrichtung 26 in die Probenkammer 34 hinein und aus dieser herausbewegt werden, sodass der Verdichtungskolben 25 durch Aufprägung einer Verdichtungskraft 27 auf die Gutprobe 28 deren Verdichtung in Längsrichtung bewirkt. Zudem kann der Verdichtungskolben 25 gemäß Pfeilrichtung 29 eine Relativbewegung, im einfachsten Fall eine Dreh oder Oszillierbewegung um seine Längsachse 30 ausführen, sodass in die Gutprobe 28 zugleich Querkräfte 31 eingeleitet werden, die die Fasern der Gutprobe 28 auch in Querrichtung verschieben, sodass ein intensiver Verdichtungseffekt in der Gutprobe 28 bewirkt wird. Ein besonders intensiver Verdichtungseffekt wird dann erzielt, wenn dem Verdichtungskolben 25 gutprobenseitig ein im dargestellten Ausführungsbeispiel kalottenförmiger Kontaktkopf 32 angeformt ist und der Kontaktkopf 32 eine Vielzahl geriffelter Mitnehmer 35 aufnimmt die auf die Gutprobe 28 einwirken.

In Analogie zur DE 103 06 725, auf deren Offenbarungsgehalt hier unmittelbar Bezug genommen wird und die mithin Bestandteil der Offenbarung dieser Erfindung werden soll, wird durch eine Bewegung des Verdichtungskolbens 25, in Verbindung mit der gezeigten Ausbildung des Verdichtungskolbens 25, in Richtung der am gegenüberliegenden Ende der Probenkammer 34 angeordneten Sensoreinrichtung 36, die Öffnung nach einer gewissen Zeit geschlossen. Ein separater, gesteuerter Schieber an der Öffnung 23 sowie ein Zwischeftfördermittel zur Befüllung der Probenkammer 34 liegen im Rahmen der Erfindung und werden von dieser mit erfasst. Ferner kann die Öffnung 23 auch im aktiven Förderbereich des Nachbeschleunigers 17 angeordnet sein.

Die Bewegung des Verdichtungskolbens 25 innerhalb der Probenkammer 34 wird von einem hier verwendeten gesteuerten Hubzylinder 37 ausgeführt, wobei der Hubzylinder 37 dem Verdichtungskolben zugleich eine translatorische als auch rotatorische Bewegung aufprägen kann. Eine nicht näher gezeigte, dem Fachmann jedoch bekannte elektrohydraulische Steuereinrichtung bewirkt auf Befehl einer ebenfalls nicht näher dargestellten übergeordneten Probensteuerung, über die schematisch dargestellte Leitung 38, die Zuführung einer Ölmenge zu dem Hubzylinder 37 und führt hierdurch eine Bewegung des Verdichtungskolbens 25 aus der gezeigten hinteren Endlage herbei. Die Stellung des Verdichtungskolbens 25 in der Probenkammer 34 wird durch einen Lagesensor 39 erfasst und von der Probensteuerung abgefragt. Anhand der Stellung des Verdichtungskolbens 25 in der Probenkammer 34 kann in Verbindung mit den bekannten Abmessungen der Probenkammer 34, für jede Lage des Verdichtungskolbens innerhalb der Probenkammer 34, ein Volumen der Gutprobe ermittelt werden. Der Lagesensor 39 erstreckt sich gemäß Figur 1 über annähernd die gesamte Länge der Verdichtungseinrichtung 24, sodass dieser neben der Position des Verdichtungskoibens 25 zugleich die Ausdehnung der Gutprobe 28 im belasteten und unbelasteten Zustand ermitteln kann. In einer dem Lagesensor 39 zugeordneten Recheneinheit 40 wird aus der Ausdehnung der Gutprobe 28 in belastetem und unbelastetem Zustand ein der Rückdehnung der Entegutprobe 28 proportionales Rückdehnungssignal X generiert, welches in erfindungsgemäßer Weise zugleich ein Maß für das die Verdichtungseigenschaft bildende Rückdehriungsverhalten ist.

Die Ermittlung der Vorverdichtung der Gutprobe kann durch wenigstens einen geeigneten dem Fachmann bekannten Sensor, beispielsweise durch einen Drucke Kraft-/ oder Dichtesensor erfolgen. Dabei kann der Sensor in der Probenkammer 34 angeordnet sein oder beispielsweise durch die Sensoreinrichtung 36 selbst gebildet werden. In der dargestellten Figur 1 wird der in der Leitung 38 anstehende Druck durch einen Drucksensor 41 erfasst und an die Probensteuerung gemeldet. Anhand des sensierten Drucks, wird die in die Gutprobe 28 eingeleitete Verdichtungskraft 27 dann repräsentativ für die definierte Vorverdichtung der Gutprobe 28 ermittelt. Der Drucksensor 41 kann ferner auch am Presskolben 25 oder am Hubzylinder 37 oder an dessen Zuleitung 38 angeordnet sein.

Die Probensteuerung steht ferner mit der Einstelleinrichtung 5, der Anzeigeeinrichtung 4 und wenigstens einem Schalter 6 in der Fahrerkabine 2 in Verbindung. Hiermit kann die Aktivierung der Probennahme vorgenommen, die Vorgabe einer Erntegutart beziehungsweise die Stellung des Verdichtungskolbens 25 für den nachfolgend Hub des Verdichtungskolbens 25 beziehungsweise den Entleerungshub oder die Schwellwerte für die Befüll- und definierten Vorverdichtungen eingestellt werden. Erfindungsgemäß können Schwellwerte für unterschiedliche Verdichtungen, durch die Einstelleinrichtung 5 eingestellt oder aus einer Speichereinrichtung ausgewählt werden, um so die Verdichtungseinrichtung 24 an die unterschiedlichen Erntegüter und deren Verdichtungseigenschaften anzupassen. Zur Vermeidung von Lufteinschlüssen und zur Erzielung einer homogenen Gutprobe werden sperrige Erntegüter, wie längeres oder älteres Gras sowie Stroh, bis hin zu einer größeren definierten Verdichtungskraft 27 vorverdichtet. Über die Anzeigeeinrichtung 4 können der aktuelle Verfahrensablauf und die eingestellten sowie ermittelten Parameter der Probennahme beziehungsweise der Gutprobe 28 dem Bediener des Feldhäckslers 1 visualisiert werden.

Von der Probensteuerung wird der erfindungsgemäße Ablauf der Ermittlung eines Erntegutparameters automatisch gesteuert Anhand der von dem Lagesensor 39 angezeigten Stellung des Verdichtungskolbetis 25 wird eine Befüllung der Probenkammer 34 mit Erntegut erkannt. Hierfür kann die Probensteuerung diese Stellung des Verdichtungskolbens 25, nach beispielsweise einer manuellen Aktivierung der Probennahme durch den Schalter 6, zunächst automatisch herbeiführen, Während der Befüllung ist erfindungsgemäß vorgesehen, dass der Verdichtungskolben 25 in Achsrichtung 30 Hubbewegungen 26 und zugleich Dreh- und Oszillierbewegungen 29 ausführt. Hierdurch wird das sich schon in der Probenkammer 34 unterhalb der Öffnung 23 befindliche Erntegut weiter in die Probenkammer 34 gedrückt, verdichtet und die Öffnung 23 für nachfolgendes Erntegut freigeräumt. Am Ende des Befüllvorganges wird der Hubzylinder 37 von der Probensteuerung bis an eine vorgegebene Stellung, beispielsweise bis das die Öffnung 23 von dem Verdichtungskolbeti 25 verschlossen wird, bewegt und dann in die gezeigte Endlage zurückverfahren. Von der Probensteuerung wird beim Freiräumen weiterhin die Befüllverdichtung anhand der in die schon vorhandene Gutprobe 28 eingeleitete Verdichtungskraft 27 überwacht. Erreicht die Verdschtungskraft 35 einen vorgegebenen Schwerwert, wird der Befüllvorgang beendet, In der Probenkammer 34 befindet sich nun eine für die Ermittlung des jeweiligen Erntegutparameters ausreichend vorverdichtete Gutprobe 28. Es liegt im Rahmen der Erfindung, dass während des Befüllprozesses der Probenkammer 34 ein geringerer Schwellwert (Befüllverdichtung) für die Verdichtungskraft 27 oder die Dreh- oder Oszillierbewegung 29 des Verdichtungskolbens 25 vorwählbar ist und erst die abschließende Verdichtung der Gutprobe 28 die definierte Vorverdichtung bewirkt. Von der Probensteuerung wird nun der Hubzylinder 37 erfindungsgemäß zur weiteren Verdichtung der Gutprobe 28 angesteuert und der Verdichtungskolben 25 so weit in der Proben kammer 34 verfahren, bis das die definierte Vorverdichtung beispielsweise die durch einen zweiten Schellwerte in der Probensteuerung vorgegebene Verdichtungskraft 27 in die Gutprobe 28 eingeleitet wird. Nach der Verdichtung und Sensierung der Gutprobe 28 wird diese in an sich bekannter und deshalb nicht näher beschriebener Weise entweder wieder in den Gutstrom zurückgeführt oder aus dem Feldhäcksler 1 abgefördert.

Während des Verdichtungsprozesses kann die Probensteuerung in an sich bekannter Weise die Lage des Verdichtungskolbens 25 beziehungsweise das Volumen der Gutprobe 28, die Verdichtungskraft 27 und das Rückdehnutigsverhalten der Gutprobe 28 ständig ermitteln und in einen in der Probensteuerung befindlichen Speicher als Wertepaare abspeichern. Aus den aufgezeichneten Messwerten wird das Verhältnis zwischen dem Volumen der Gutprobe 28 und der Verdichtungskraft 27 ermittelt und ergibt dann eine entsprechende Kennlinie. Da das Volumen der vorverdichteten Gutprobe 28 in der Probenkammer 34 nach jeder Gutprobennahme nicht gleich hoch ist, werden die aufgezeichneten Kennlinien jeweils auf einen Verhältniswert oder auf eine vorgegebene Verdichtung normiert, Hierdurch wird ein Vergleich von Kennlinien und ein Ablesen von Korrekturfaktoren möglich.

Die unterschiedlichen Eigenschaften, wie Erntegutfeuchte oder Erntegutstruktur, der Erntegüter sowie der Einsatz der Erntemaschine in unterschiedlichen Erntegutarten bewirken eine unterschiedliche Verdichtung und damit eine unterschiedliche Auslenkung 22 der Vorpresswalze 13. Der hierauf beruhende und ermittelte Erntegutdurchsatz können erfindungsgemäß entsprechend korrigiert werden. Aus dem Verhältnis zwischen dem Volumen der Gutprobe 28 und der Verdichtungskraft 27, kann auf die Komprimierbarkeit des momentan verarbeiteten Erntegutes rückgeschlossen werden.

In einer vorteilhaften Ausgestaltung der Erfindung kann die Verdichtungskraft 27 sowie die Rotationsbewegung 29 des Verdichtungskolbens 25 in Abhängigkeit von der Erntegutart und/oder deren Ernteguteigenschaft verändert werden. Dies ist insbesondere deshalb von Bedeutung, da es allgemein bekannt ist, dass sich die Verdichtungsfähigkeit eines Gutes mit abnehmendem Feuchtegrad verschlechtert, sodass diesem Effekt durch intensiveres Verdichten der Gutprobe 28 entgegen gewirkt werden kann.

Der Feuchtegehalt eines Erntegutes und im dargestellten Ausführungsbeispiel der Gutprobe 28 kann mittels der bereits erwähnten Sensoreinrichtung 36 in der Weise bestimmt werden, dass diese an der hinteren Wand 42 der Probenkammer 34 angeordnet ist und einen an sich bekannten, beispielsweise kapazitiven Feuchtesensor umfasst. Der von dem Feuchtesensor ermittelte Werte wird in Bezug auf ein bekanntes Gutvolumen ermittelt. Für ein aussagefähiges Ergebnis ist es daher erforderlich, dass der Feuchtewert, der sich auf ein davon unterschiedliches Probenvolumen bezieht, entsprechend korrigiert wird. Aus dem erfindungsgemäß ermittelten Volumen der innerhalb der Probenkammer 34 befindlichen Gutprobe 28 ist somit eine entsprechende Korrektur des von dem Feuchtesensor ermittelten Feuchtewertes möglich.

In an sich bekannter und in der DE 103 06 725 näher beschrieben Weise sind die Verdichtungseinrichtung 24, die dieser zugeordnete Sensoreinrichtung 36 und der beschriebene Lagesensor 29 Bestandteil einer Ertragsmesseinrichtung 43, die unter Integration einer an sich bekannten, die Masse der Gutprobe 28 bestimmenden Wiegeinrichtung 44 einen Erntegutertrag des den Feldhäcksler 1 durchlaufenden Gutstromes ermitteln kann, indem aus den verschiedenen Messgrößen eine Gutdichte und ein Gutvolumen bestimmt wird. Indem nun eine der Messgrößen das Rückdehnungsverhalten X der Gutprobe 28 ist, wird eine qualitative Verbesserung der ermittelten Gutdichte und des zu ermittelnden Gutvolumens erreicht.

Zur Verbesserung des ermittelbaren Erntegutertrages ist es nun vorgesehen, dass die Ertragsmesseinrichtung 43 den Emtegutdurchsatz und/oder den Erntegutertrag unter Berücksichtigung der ermittelten Verdichtung und des ermittelten Rückdehnungsverhaltens X der Gutprobe 28 bestimmt. Dies hat insbesondere den Vorteil, dass differierende Ernteguteigenschaften bei der Ermittlung des Erntegutdurchsatzes besser berücksichtigt werden können. Indem das generierte, die Verdichtbarkeit des Erntegutes qualifizierende Rückdehnungssignal X zudem für weitere Anwendungen verfügbar ist, wird erreicht, dass nachfolgende gutbearbeitende Prozesse besser auf die jeweiligen Guteigenschaften abgestimmt werden können. Im einfachsten Fall kann diese Verfügbarkeit durch Datenaustausch mittels an sich bekannter Datenübertragungssysteme sichergestellt werden.

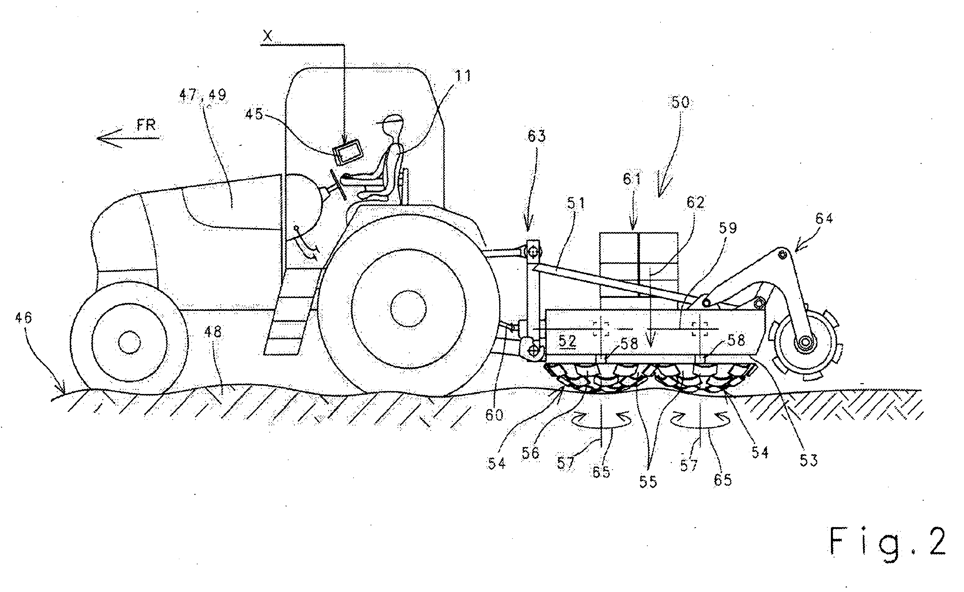

Indem gemäß Figur 2 dieses Rückdehnungssignal X über eine Steuer- und Auswerteinheit 45 einer ein Flachsilo 46 befüllenden landwirtschaftlichen Arbeitsmaschine 47 zugeführt wird, kann die landwirtschaftliche Arbeitsmaschine 47 in Abhängigkeit von dem Rückdehnungsverhalten X des zu verdichtenden Erntegutes 48 eine intensivere oder weniger intensive Verdichtung des Erntegutes 48 veranlassen, wobei das zu verdichtende Erntegut 48 zuvor mit dem in Figur 1 dargestellten und erläuterten Feldhäcksler 1 geerntet und sensiert wurde. Im dargestellten Ausführungsbeispiel wird die landwirtschaftliche Arbeitsmaschine 47 von einem Schlepper 49 und einer diesem heckseitig zugeordneten Verdichtungsvorrichtung 50 gebildet.

Die Verdichtungsvorrichtung 50 besteht im wesentlichen aus einem aus Stahlrohr hergestellten Tragrahmen 51. Umfangsseitig ist der Tragrahmen 16 durch im rechten Winkel dazu angeordnete Bleche 52 geschlossen. An der Bodenseite ist der Tragrahmen 51 ebenfalls ganzflächig verschlossen, sodass sich hier eine Auflage- oder Gleitfläche 53 ausbildet, Der Verdichtungsvorrichtung 50 sind untenseitig versetzt zueinander angeordnete Verdichtungselemente 54 zugeordnet. Jedes Verdichtungselement 54 besteht aus einem kalottenförmigen Grundkörper 55 auf dessen Oberfläche geriffelte Mitnehmer 56 vorgesehen sind. Die Verdichtungselemente 54 sind um ihre vertikale Rotationsachsen 57 umlaufend oder oszillierend antreibbar. Hierfür ist jeder Grundkörper 55 jedes Verdichtungselementes 54 drehfest mit einer Welle 58 verbunden und kann über einen nicht näher beschriebenen Antriebsstrang 59 von der Zapfwelle 60 des Traktors 49 angetrieben werden. Obenseitig kann dem Tragrahmen 51 der Verdichtungsvorrichtung 50 zudem ein Ballastgewicht 61 zur Erhöhung der von der Verdichtungsvorrichtung 50 auf das Erntegut 48 übertragenen Verdichtungskraft 62 zugeordnet sein. Über die Dreipunkt-Hydraulik 63 des Traktors 49 kann die Verdichtungsvorrichtung 50 in Arbeits- bzw. Transportstellung gebracht werden. Gleichzeitig kann dadurch die Verdichtungsvorrichtung 50 druckbeaufschlagt werden. Denkbar ist zudem, die Neigung der Verdichtungsvorrichtung 50 in Bezug auf das abgelegte Erntegut 48 über die Dreipunkt-Hydraulik 63 zu variieren, um dadurch Aufstauungen von Erntegut 48 vor der Verdichtungsvorrichtung 50 und damit ein Einfahren der Verdichtungsvorrichtung 50 in das abgelegte Erntegut 48 zu vermeiden. An der dem Traktor 49 abgewandten Seite der Verdichtungsvorrichtung 50 kann dieser zudem eine an sich bekannte Erntegutverteilvorrichtung 64 zugeordnet sein.

Um nun eine optimale Verdichtung des Erntegutes 48 zu erreichen, wird erfindungsgemäß das übermittelte Rückdehnungssignal X in der Weise berücksichtigt, dass die Wirkung der Verdichtungskraft 62 und die Dreh- oder Oszillierbewegung 65 regelbar ist. Im einfachsten Fall wird die Verdichtungskraft 62 und die Dreh- oder Oszillierbewegung 65 ums so größer bzw. um so intensiver sein, je größer das Rückdehnungsverhalten des zu verdichtenden Erntegutes 48 ist.

Zum Verdichten des Erntegutes 48 liegt die Verdichtungsvorrichtung 50 auf dem abgelegten Erntegut 48 auf und übt aufgrund des Ballastgewichts 61 und/oder der Dreipunkt-Hydraulik 63 eine vertikale Verdichtungskraft 62 auf das Erntegut 48 aus, während die einzelnen, um ihre vertikale Rotationsachse 57 rotierenden Verdichtungselemente 54 mit den ihnen zugeordneten geriffelten Mitnehmern 56 durch die auftretenden Querkräfte ein Ineinanderschieben des zu verdichtenden Erntegutes 48 bewirken und damit das Schließen von unerwünschten Hohlräumen im Silo 46 bewirken.

Es liegt im Rahmen der Erfindung, dass Änderungen sowie Abweichungen möglich sind, ohne dass der Fachmann dadurch den der Erfindung zugrundeliegende Erfindungsgedanken verlassen muss.

### Bezugszeichenliste

- 1: Feldhäcksler
- 2: Fahrerkabine
- 3: Antriebsräder
- 4: Anzeigeeinrichtung
- 5: Einstelleinrichtung
- 6: Schalter
- 7: Fahrhebel
- 8: Vorsatzgerät
- 9: Feldboden
- 10: Einzugsaggregat
- 11: Einzugswalzen
- 12: vordere Vorpresswalze
- 13: hintere Vorpresswalze
- 14: Häckseltrommel
- 15: Trommelboden
- 16: Förderrichtung
- 17: Nachbeschleuniger
- 18: Austragschacht
- 19: Auswurfkrümmer
- 20: Feder
- 21: Spaltsensor
- 22: Auslenkung
- 23: Öffnung
- 24: Verdichtungseinrichtung
- 25: Verdichtungskolben
- 25a: Verdichtungselement
- 26: Pfeilrichtung
- 27: Verdichtungskraft
- 28: Gutprobe
- 29: Pfeilrichtung
- 30: Längsachse
- 31: Querkraft
- 32: Kontaktkopf
- 33: Fahrtrichtung
- 34: Probenkammer
- 35: Mitnehmer
- 36: Sensoreinrichtung
- 37: Hubzylinder
- 38: Leitungen
- 39: Lagesensor
- 40: Recheneinheit
- 41: Drucksensor
- 42: hintere Wand
- 43: Ertragsmesseinrichtung
- 44: Wiegeeinrichtung
- 45: Steuer- und Auswerteinheit
- 46: Flachsilo
- 47: landwirtschaftliche Arbeitsmaschine
- 48: Erntegut
- 49: Traktor
- 50: Verdichtungsvorrichtung
- 51: Tragrahmen
- 52: Blech
- 53: Auflage- und Gleitfläche
- 54: Verdichtungselement
- 55: Grundkörper
- 56: geriffelte Mitnehmer
- 57: Rotationsachse
- 58: Welle
- 59: Antriebsstrang
- 60: Zapfwelle
- 61: Ballastgewicht
- 62: Verdichtungskraft
- 63: Dreipunkt-Hydraulik

- 64: Erntegutverteilvorrichtung
- 65: Dreh- oder Oszillierbewegung

- X: Rückdehnungssignal

## Patentansprüche

1. Verfahren zur Bestimmung der Verdichtungseigenschaft von abgeschnittenem Erntegut in einer landwirtschaftlichen Arbeitsmaschine (1), mit einer während des Arbeitsprozesses mit einer Gutprobe (28) befüllbaren Verdichtungseinrichtung (24), wobei die Verdichtung der Gutprobe (28) in Abhängigkeit von wenigstens einer von der Verdichtungseinrichtung (24) erzeugten Verdichtung der Gutprobe (28) ermittelt wird.
**dadurch gekennzeichnet, dass** zumindest ein der Verdichtungseinrichtung (24) zugeordnetes Verdichtungselement (25, 25a) zugleich die Gutprobe (28) durch translatorische Bewegung auf die Gutprobe (28) zu belastet und sich relativ zur Gutprobe (28) mit einer Dreh- oder Oszillierbewegung um die eigene Längachse (30) bewegt.

2. Verfahren zur Bestimmung der Verdichtungseigenschaft nach Anspruch 1,
**dadurch gekennzeichnet,**
**dass** in Abhängigkeit von der Erntegutart und/oder deren Emteguteigenschaft die Belastung (27, 31) und die Relativbewegung (29) des wenigstens einen Verdichtungselementes (25, 25a) einstellbar ist.

3. Verfahren zur Bestimmung der Verdichtungseigenschaft nach einem der vorhergehenden Ansprüche,
**dadurch gekennzeichnet,**
**dass** aus der ermittelten Verdichtung der Gutprobe (28) ein Maß für die Verdichtungseigenschaft des Erntegutes (28, 48) abgeleitete wird.

4. Verfahren zur Bestimmung der Verdichtungseigenschaft nach einem der vorhergehenden Ansprüche,
**dadurch gekennzeichnet,**
**dass** die Verdichtungseigenschaft das Rückdehnungsverhalten (X) der Gutprobe (28) ist.

5. Verfahren zur Bestimmung der Verdichtungseigenschaft nach einem der vorhergehenden Ansprüche,
**dadurch gekennzeichnet,**
**dass** in der landwirtschaftlichen Arbeitsmaschine (1) eine Ertragsmesseinrichtung (43) vorhanden ist und der von der Ertragsmesseinrichtung (43) ermittelte Erntegutdurchsatz und/oder Erntegutertrag unter Berücksichtigung der ermittelten Verdichtung und des ermittelten Rückdehnungsverhaltens (X) der Gutprobe (28) bestimmt wird.

6. Verfahren zur Bestimmung der Verdichtungseigenschaft nach einem der vorhergehenden Ansprüche,
**dadurch gekennzeichnet,**
**dass** das ermittelte Rückdehnungsverhalten (X) des Erntegutes (28, 48) weiteren Anwendungen verfügbar ist.

7. Verfahren zur Bestimmung der Verdichtungselgenschaft nach Anspruch 6,
**dadurch gekennzeichnet,**
**dass** die weitere Anwendung das Betreiben einer landwirtschaftlichen Arbeitsmaschine (47, 49) mit einer Verdichtungsvorrichtung (50) in einem Flachsilo (46) ist und vor der Anlieferung des zu silierenden Erntegutes (48), der Betreiber der landwirtschaftlichen Arbeitsmaschine (47) zumindest das ermittelte Rückdehnungsverhalten (X) mitgeteilt bekommt, wobei der Bediener anhand dieser Mittellung die Wirkung der Verdichtungsvorrichtung (50) einstellen kann.

8. Verfahren zur Bestimmung der Verdichtungseigenschaft nach einem der vorhergehenden Ansprüche,
**dadurch gekennzeichnet,**
**dass** die landwirtschaftliche Arbeitsmaschine ein Feldhäcksler (1) mit wenigstens einer Einzugswalze (11) und zumindest einer auslenkbar gelagerten Vorpresswalze (12, 13) ist und wobei das Erntegut zwischen der wenigstens einen Einzugs- und Vorpresswalze (11-13) komprimierbar ist,
- anhand der Auslenkung der wenigstens einen Vorpresswalze (12, 13) der Erntegutdurchsatz durch die landwirtschaftliche Arbeitsmaschine (1) ermittelt,
- während des Verdichtungsprozesses der Gutprobe (28) in der Verdichtungseinrichtung (24), die Verdichtungskraft (27), das zugehörige Volumen und ein Maß für das Rückdehnungsverhalten (X) der Gutprobe (28) ermittelt,
- wenigstens ein Verhältnis zwischen der Verdichtungskraft (27), dem Rückdehnungsverhalten (X) und dem Volumen ermittelt und
- das wenigstens eine Verhältnis bei der Ermittlung des Erntegutdurchsatzes berücksichtigt wird.

9. Vorrichtung zur Bestimmung der Verdichtungseigenschaft von abgeschnittenem Erntegut in einer landwirtschaftlichen Arbeitsmaschine (1), mit wenigstens einer während des Arbeitsprozesses mit einer Gutprobe (28) befüllbaren Verdichtungseinrichtung (24), wobei wenigstens ein Sensor (39) zur Ermittlung einer definierten Vorverdichtung der in der Verdichtungseinrichtung (24) befindlichen Gutprobe (28) vorhanden ist und wobei der Verdichtungsvorrichtung (24) zumindest ein Verdichtungselement (25, 25a) zugeordnet ist,
**dadurch gekennzeichnet, dass** das Verdichtungselement (25, 25a) zugleich bewegbar ist mit einer die Gutprobe (28) belastenden translatorischen Bewegung auf die Gutprobe (28) zu und mit einer Dreh-oder Oszillierbewegung um die eigene Längsachse (30) relativ zur Gutprobe (28).

10. Vorrichtung zur Bestimmung der Verdichtungseigenschaft von abgeschnittenem Erntegut nach Anspruch 9,
**dadurch gekennzeichnet,**
**dass** die Gutprobe (28) unmittelbar durch eine Öffnung (23) aus dem Emtegutstrom in der landwirtschaftlichen Arbeitsmaschine (1) in die Verdichtungseinrichtung (24) geleitet wird.

11. Vorrichtung zur Bestimmung der Verdichtungseigenschaft von abgeschnittenem Erntegut nach einem der Ansprüche 9 oder 10,
**dadurch gekennzeichnet,**
**dass** die landwirtschaftliche Arbeitsmaschine ein Feldhäcksler (1) mit einer Häckseltrommel (14) und einem die Häckseltrommel (14) zumindest teilweise umschließenden, gutumlenkenden Trommelboden (15) ist und die Öffnung (23) an dem gutumlenkenden Trommelboden (15) angeordnet ist.

12. Vorrichtung zur Bestimmung der Verdichtungseigenschaft von abgeschnittenem Erntegut nach einem der Ansprüche 9 bis 11,
**dadurch gekennzeichnet,**
**dass** die Gutprobe (28) aus der Verdichtungseinrichtung (24) mittels des wenigstens einen Verdichtungselementes (25, 25a) in den Emtegutstrom der landwirtschaftlichen Arbeitsmaschine (1) zurückgeführt wird.

13. Vorrichtung zur Bestimmung der Verdichtungseigenschaft von abgeschnittenem Erntegut nach wenigstens einem der Ansprüche 9 bis 12,
**dadurch gekennzeichnet,**
**dass** der weiteren landwirtschaftlichen Arbeitsmaschine eine Steuer- und Auswerteinheit (45) zugeordnet ist und die Steuer- und Auswerteinheit (45) ein der Rückdehnung des zu verdichtenden Erntegutes (48) proportionales Rückdehnungssignal (X) empfängt und Mittel vorgesehen sind die eine Änderung der von der Verdichtungsvorrichtung (50) in das zu verdichtende Erntegut (48) einzubringenden Belastungen (62, 65) ermöglicht.

## Claims

1. Method for determining the compression property of harvested crop material in an agricultural working machine (1), with a compressing device (24) able to be filled with a material sample (28) during the working process, wherein the compression of the material sample (28) is determined depending on at least one compression, produced by the compressing device (24), of the material sample (28),
**characterized in that** at least one compressing element (25, 25a) assigned to the compressing device (24) simultaneously applies a load to the material sample (28) by translational movement onto the material sample (28) and moves relative to the material sample (28) with a rotational or oscillating movement about its own longitudinal axis (30).

2. Method for determining compression property according to claim 1,
**characterized in that**
the application of load (27, 31) and the relative movement (29) of the at least one compressing element (25, 25a) can be adjusted depending on the type of crop material and/or its crop material property.

3. Method for determining compression property according to one of the previous claims,
**characterized in that**
a measure of the compression property of the crop material (28, 48) is deduced from the determined compression of the material sample (28).

4. Method for determining compression property according to one of the previous claims,
**characterized in that**
the compression property is the elastic recovery behaviour (X) of the material sample (28).

5. Method for determining compression property according to one of the previous claims,
**characterized in that**
there is a yield measuring device (43) in the agricultural working machine (1) and the crop material throughput and/or crop material yield determined by the yield measuring device (43) is determined taking into account the determined compression and the determined elastic recovery behaviour (X) of the material sample (28).

6. Method for determining compression property according to one of the previous claims,
**characterized in that**
the determined elastic recovery behaviour (X) of the crop material (28,48) is available for further applications.

7. Method for determining compression property according to claim 6,
**characterized in that**
the further application is the operation of an agricultural working machine (47, 49) with a compressing device (50) in a horizontal silo (46) and, before the crop material (48) to be ensilaged is delivered, the operator of the agricultural working machine (47) is notified at least of the determined elastic recovery behaviour (X), wherein the operator can use this information to adjust the action of the compressing device (50).

8. Method for determining compression property according to one of the previous claims,
**characterized in that**
the agricultural working machine is a forage harvester (1) with at least one feed roller (11) and at least one movably mounted pre-compression roller (12,13) and wherein the crop material can be compressed between the at least one feed and pre-compression rollers (11-13),
- the crop material throughput is determined by the agricultural working machine (1) on the basis of the movement of the at least one pre-compression roller (12,13),
- during the process of compressing the material sample (28) in the compressing device (24), the compression force (27), the associated volume and a measure of the elastic recovery behaviour (X) of the material sample (28) are determined,
- at least one relationship between the compression force (27), the elastic recovery behaviour (X) and the volume is determined and
- the at least one relationship is taken into account when determining the crop material throughput.

9. Device for determining the compression property of harvested crop material in an agricultural working machine (1), with at least one compressing device (24) able to be filled with a crop material (28) during the working process, wherein there is at least one sensor (39) for determining a defined pre-compression of the material sample (28) located in the compressing device (24) and wherein at least one compressing element (25, 25a) is assigned to the compressing device (24), **characterized in that** the compressing element (25, 25a) can simultaneously be moved onto the material sample (28) with a translational movement applying a load to the material sample (28) and relative to the material sample (28) with a rotational or oscillating movement about its own longitudinal axis (30).

10. Device for determining the compression property of harvested crop material according to claim 9,
**characterized in that**
the material sample (28) is conducted directly through an opening (23) from the flow of crop material in the agricultural working machine (1) into the compressing device (24).

11. Device for determining the compression property of harvested crop material according to one of claims 9 or 10,
**characterized in that**
the agricultural working machine is a forage harvester (1) with a chopper drum (14) and a material-deflecting drum base (15) at least partially surrounding the chopper drum (14) and the opening (23) is arranged at the material-deflecting drum base (15).

12. Device for determining the compression property of harvested crop material according to one of claims 9 to 11,
**characterized in that**
the material sample (28) is recycled from the compressing device (24) by means of the at least one compressing element (25, 25a) into the flow of crop material of the agricultural working machine (1).

13. Device for determining the compression property of harvested crop material according to at least one of claims 9 to 12,
**characterized in that**
a control and evaluation unit (45) is assigned to the further agricultural working machine and the control and evaluation unit (45) receives an elastic-recovery signal (X) proportional to the elastic recovery of the crop material (48) to be compressed and means are provided which make it possible to change the loads (62, 65) to be introduced by the compressing device (50) into the crop material (48) to be compressed.

## Revendications

1. Procédé pour déterminer la propriété de compactage d'un produit de récolte découpé dans une machine de travail agricole (1), avec un dispositif de compactage (24) pouvant être rempli avec un échantillon de produit (28) pendant le processus de travail, le compactage de l'échantillon de produit (28) étant déterminé en fonction d'au moins un compactage de l'échantillon de produit (28) réalisé par le dispositif de compactage (24), **caractérisé en ce qu'**au moins un élément de compactage (25, 25a) associé au dispositif de compactage (24) applique une charge à l'échantillon de produit (28) par un déplacement de translation vers l'échantillon de produit (28) et, en même temps, se déplace par rapport à l'échantillon de produit (28) avec un mouvement de rotation ou d'oscillation autour de son propre axe longitudinal (30).

2. Procédé pour déterminer la propriété de compactage selon la revendication 1, **caractérisé en ce que** la charge (27, 31) et le déplacement relatif (29) dudit au moins un élément de compactage (25, 25a) sont réglables en fonction de la nature du produit de récolte et/ou d'une propriété du produit de récolte.

3. Procédé pour déterminer la propriété de compactage selon une des revendications précédentes, **caractérisé en ce qu'**une mesure de la propriété de compactage du produit de récolte (28, 48) est dérivée du compactage déterminé sur l'échantillon de produit (28).

4. Procédé pour déterminer la propriété de compactage selon une des revendications précédentes, **caractérisé en ce que** la propriété de compactage est le comportement de récupération élastique (X) de l'échantillon de produit (28).

5. Procédé pour déterminer la propriété de compactage selon une des revendications précédentes, **caractérisé en ce qu'**un dispositif de mesure de rendement (43) est présent dans la machine de travail agricole (1) et le débit de produit de récolte et/ou le rendement de produit de récolte est déterminé par le dispositif de mesure de rendement (43) en tenant compte du compactage déterminé et du comportement de récupération élastique (X) déterminé de l'échantillon de produit (28).

6. Procédé pour déterminer la propriété de compactage selon une des revendications précédentes, **caractérisé en ce que** le comportement de récupération élastique (X) déterminé du produit de récolte (28, 48) est disponible pour d'autres applications.

7. Procédé pour déterminer la propriété de compactage selon la revendication 6, **caractérisé en ce que** l'autre application est le fonctionnement d'une machine de travail agricole (47, 49) avec un dispositif de compactage (50) dans un silo horizontal (46) et, avant la livraison du produit de récolte à ensiler (48), l'opérateur de la machine de travail agricole (47) est informé au moins du comportement de récupération élastique (X) déterminé et peut, à l'aide de cette information, régler l'effet du dispositif de compactage (50).

8. Procédé pour déterminer la propriété de compactage selon une des revendications précédentes, **caractérisé en ce que** la machine de travail agricole est une ensileuse (1) dotée d'au moins un rouleau d'introduction (11) et d'au moins un rouleau de précompression (12, 13) monté de manière à pouvoir être dévié et dans laquelle le produit de récolte peut être comprimé entre lesdits au moins un rouleaux d'introduction et de précompression (11-13),
- le débit de produit de récolte à travers la machine de travail agricole (1) étant déterminé à partir de la déviation dudit au moins un rouleau de précompression (12, 13),
- la force de compactage (27), le volume associé et une mesure du comportement de récupération élastique (X) de l'échantillon de produit (28) étant déterminés dans le dispositif de compactage (24) pendant le processus de compactage de l'échantillon de produit (28),
- au moins un rapport entre la force de compactage (27), le comportement de récupération élastique (X) et le volume étant déterminé et
- ledit au moins un rapport étant pris en compte dans la détermination du débit de produit de récolte.

9. Dispositif pour déterminer la propriété de compactage d'un produit de récolte découpé dans une machine de travail agricole (1), avec au moins un dispositif de compactage (24) pouvant être rempli avec un échantillon de produit (28) pendant le processus de travail, au moins un capteur (39) pour déterminer un précompactage défini de l'échantillon de produit (28) placé dans le dispositif de compactage (24) étant présent, et au moins un élément de compactage (25, 25a) étant associé au dispositif de compactage (24), **caractérisé en ce que** l'élément de compactage (25, 25a) peut effectuer simultanément un mouvement de translation en direction de l'échantillon de produit (28) pour appliquer une charge à l'échantillon de produit (28) et un mouvement de rotation ou d'oscillation par rapport à l'échantillon de produit (28) autour de son propre axe longitudinal (30).

10. Dispositif pour déterminer la propriété de compactage d'un produit de récolte découpé selon la revendication 9, **caractérisé en ce que** l'échantillon de produit (28) est prélevé directement sur le flux de produit de récolte dans la machine de travail agricole (1) et dirigé dans le dispositif de compactage (24) à travers une ouverture (23).

11. Dispositif pour déterminer la propriété de compactage d'un produit de récolte découpé selon une des revendications 9 ou 10, **caractérisé en ce que** la machine de travail agricole est une ensileuse (1) dotée d'un tambour de hachage (14) et d'un fond de tambour (15) qui dévie le produit de récolte et entoure au moins partiellement le tambour de hachage (14), et l'ouverture (23) est disposée sur le fond de tambour (15) déviant le produit de récolte.

12. Dispositif pour déterminer la propriété de compactage d'un produit de récolte découpé selon une des revendications 9 à 11, **caractérisé en ce que** l'échantillon de produit (28) est renvoyé du dispositif de compactage (24) dans le flux de produit de récolte de la machine de travail agricole (1) au moyen dudit au moins un élément de compactage (25, 25a).

13. Dispositif pour déterminer la propriété de compactage d'un produit de récolte découpé selon au moins une des revendications 9 à 12, **caractérisé en ce qu'**une unité de commande et d'analyse (45) est associée à l'autre machine de travail agricole, et l'unité de commande et d'analyse (45) reçoit un signal de récupération élastique (X) proportionnel à la récupération élastique du produit de récolte (48) à compacter, et des moyens sont prévus pour permettre de modifier les charges (62, 65) à appliquer par le dispositif de compression (50) au produit de récolte (48) à compacter.
